# EUROPÄISCHE PATENTSCHRIFT

(11) **EP 3 470 255 B1**
(45) Veröffentlichungstag und Bekanntmachung des Hinweises auf die Patenterteilung: **09.02.2022**
(21) Anmeldenummer: 18197948.5
(22) Anmeldetag: 01.10.2018
(51) Int. Cl.: B60L 5/22, B60L 5/12

(54) **STROMABNEHMERANORDNUNG FÜR EIN OBERLEITUNGSFAHRZEUG UND OBERLEITUNGSFAHRZEUG**
CURRENT COLLECTOR FOR A TROLLEY CAR AND TROLLEY CAR
SYSTÈME DE PRISE DE COURANT POUR UN VÉHICULE ALIMENTÉ PAR CATÉNAIRE ET VÉHICULE ALIMENTÉ PAR CATÉNAIRE

(30) Priorität: 10.10.2017 DE 102017218004
(43) Veröffentlichungstag der Anmeldung: 17.04.2019
(73) Patentinhaber: Siemens Mobility GmbH, 81739 München (DE)
(72) Erfinder: Gebhard, Bruno, 91301 Forchheim (DE)

(56) Entgegenhaltungen:
- US-A- 466 807
- US-A- 612 410
- US-A- 1 154 759
- US-A- 1 199 283

## Beschreibung

Die Erfindung betrifft eine Stromabnehmeranordnung für ein Oberleitungsfahrzeug umfassend einen Stromabnehmer und eine Stromabnehmerhalterung.

Ein Stromabnehmer wird beispielsweise in Form eines Pantographen mittels Isolatoren auf dem Dach eines Oberleitungsfahrzeugs befestigt, beispielsweise an einen Wagenkasten des Fahrzeugs oder an eine zusätzliche Traverse angeschraubt.

Durch Einfädeln des Stromabnehmers in die Oberleitung kann dieser unkontrolliert abgerissen werden, wobei große Schäden am Wagenkasten und/oder an den Traversen entstehen können. Auch die Oberleitung kann schwer beschädigt werden.

Aus der US 1154759 A ist eine Stromabnehmerhalterung mit Klemmvorrichtung für ein Oberleitungsfahrzeug bekannt.

Der Erfindung liegt die Aufgabe zugrunde, die Verfügbarkeit von Oberleitungsfahrzeugen und deren Streckennetzen zu verbessern.

Gelöst wird die Aufgabe durch den Gegenstand des unabhängigen Patentanspruchs 1. Weiterbildungen und Ausgestaltungen der Erfindung finden sich in den Merkmalen der abhängigen Patentansprüche wieder.

Eine erfindungsgemäße Stromabnehmeranordnung für ein Oberleitungsfahrzeug, beispielsweise für ein spurgebundenes Fahrzeug, insbesondere ein Schienenfahrzeug, umfasst neben den weiteren Merkmalen des unabhängigen Anspruchs 1 einen Stromabnehmer und eine Stromabnehmerhalterung, die erfindungsgemäß kraftschlüssig miteinander verbunden sind. Die kraftschlüssige Verbindung von Stromabnehmer und Stromabnehmerhalterung ist dabei derart ausgebildet, dass sie bei Einwirkung einer Kraft vorgegebenen Betrags und Richtung lösbar ist.

Eine Weiterbildung der Erfindung betrifft ein Oberleitungsfahrzeug, beispielsweise ein spurgebundenes Fahrzeug, insbesondere ein Schienenfahrzeug, umfassend wenigstens eine erfindungsgemäße Stromabnehmeranordnung.

Die Kraft vorgegebenen Betrags und Richtung wirkt auf die kraftschlüssige Verbindung durch den Stromabnehmer oder durch die Stromabnehmerhalterung.

Die Stromabnehmerhalterung ist am Oberleitungsfahrzeug mittelbar oder unmittelbar befestigbar bzw. befestigt. Insbesondere ist sie fest mit dem Oberleitungsfahrzeug verbunden, beispielsweise stoff- oder formschlüssig. Mittels der fahrzeugseitigen Stromabnehmerhalterung wird der Stromabnehmer mit dem Oberleitungsfahrzeug verbunden. Die Stromabnehmerhalterung dient weiterhin der Ausrichtung des Stromabnehmers in einer vorgegebenen Richtung zum Oberleitungsfahrzeug, insbesondere in Richtung einer vorherrschenden Fahrtrichtung des Oberleitungsfahrzeugs, beispielsweise in Längsrichtung des Oberleitungsfahrzeugs. Diese stellt meist auch gleichzeitig eine vorherrschende Hauptrichtung einer Oberleitung dar. Somit ist der Stromabnehmer mittels der Stromabnehmerhalterung auch nach der Oberleitung ausgerichtet mit dem Oberleitungsfahrzeug verbindbar.

Der Stromabnehmer ist in Betriebsstellung gegen die Oberleitung vorgespannt. Somit wirkt eine lotrechte Kraft auf die kraftschlüssige Verbindung zwischen Stromabnehmer und Stromabnehmerhalterung, selbst bei stehendem Oberleitungsfahrzeug. Bei fahrendem Oberleitungsfahrzeug wirkt durch Reibung zwischen Stromabnehmer und Oberleitung eine zusätzliche Kraft entgegen der Fahrtrichtung des Oberleitungsfahrzeugs auf die kraftschlüssige Verbindung zwischen Stromabnehmer und Stromabnehmerhalterung. Die durch die Reibung zwischen Stromabnehmer und Oberleitung bewirkte Kraft auf die kraftschlüssige Verbindung kann auch weitere Richtungskomponenten aufweisen, beispielsweise auch senkrecht auf die Fahrzeuglängsachse in einer horizontalen Ebene, beispielsweise bei Kurvenfahrt. Weitere Kräfte wie Windwiderstandskräfte, Massenträgheitsmomente oder Fliehkräfte können ebenfalls auf die kraftschlüssige Verbindung zwischen Stromabnehmer und Stromabnehmerhalterung einwirken. Die kraftschlüssige Verbindung ist derart ausgebildet, dass die betriebsbedingten Kräfte, welche einer Haftreibungskraft zwischen den an der kraftschlüssigen Verbindung beteiligten Reibflächen des Stromabnehmers und der Stromabnehmerhalterung entgegen wirken, kleiner als diese Haftreibungskraft sind, so dass die kraftschlüssige Verbindung weder durch einzelne betriebsbedingte

Kräfte noch durch deren Summe in Betrag und Richtung lösbar ist. Die Haftreibungskraft verhindert die Relativbewegung der an der kraftschlüssigen Verbindung beteiligten Reibflächen des Stromabnehmers und der Stromabnehmerhalterung.

Beim Einfädeln des Stromabnehmers in eine Oberleitung wirkt jedoch eine zusätzliche Kraft von außen auf die kraftschlüssige Verbindung zwischen Stromabnehmer und Stromabnehmerhalterung ein, welche in Betrag und Richtung die Haftreibungs-kraft zwischen den an der kraftschlüssigen Verbindung beteiligten Reibflächen des Stromabnehmers und der Stromabnehmerhalterung übersteigt, so dass die kraftschlüssige Verbindung von Stromabnehmer und Stromabnehmerhalterung gelöst wird.

Zum Lösen der kraftschlüssige Verbindung zwischen Stromabnehmer und Stromabnehmerhalterung bedarf es einer Kraft von außen auf den Stromabnehmer, insbesondere eingeprägt durch die Oberleitung oder streckenseitige, insbesondere ortsfeste, Hindernisse, oder auf die Stromabnehmerhalterung, insbesondere eingeprägt durch das Oberleitungsfahrzeug, so dass auf die kraftschlüssige Verbindung zwischen Stromabnehmer und Stromabnehmerhalterung eine Kraft mit einem Betrag in eine vorgegebene Richtung wirkt, welcher einen vorgegebenen Wert übersteigt. Die vorgegebene Richtung der Kraft auf die kraftschlüssige Verbindung von Stromabnehmer und Stromabnehmerhalterung, welche zum Lösen dieser führt, steht dabei entgegen einer Richtung einer Haftreibungskraft zwischen den an der kraftschlüssigen Verbindung beteiligten Reibflächen des Stromabnehmers und der Stromabnehmerhalterung. Der Betrag der Kraft in die vorgegebene Richtung auf die kraftschlüssige Verbindung von Stromabnehmer und Stromabnehmerhalterung, welche zum Lösen dieser führt, übersteigt den Wert der Haftreibungskraft zwischen den an der kraftschlüssigen Verbindung beteiligten Reibflächen des Stromabnehmers und der Stromabnehmerhalterung entgegen der vorgegebenen Richtung.

Insbesondere sind der Stromabnehmer und die Stromabnehmerhalterung ausschließlich kraftschlüssig miteinander verbunden. Die Haftreibungskraft der kraftschlüssige Verbindung zwischen Stromabnehmer und Stromabnehmerhalterung wird durch eine Normalkraft auf die an der kraftschlüssigen Verbindung beteiligten Reibflächen des Stromabnehmers und der Stromabnehmerhalterung, sowie durch einen Haftreibungskoeffizienten der an der kraftschlüssigen Verbindung beteiligten Reibflächen des Stromabnehmers und der Stromabnehmerhalterung bestimmt. Letzterer ist wiederum Abhängig von den einzelnen Material- und Oberflächeneigenschaften. Auch Form und Größe der Kontaktfläche kann Einfluss auf die kraftschlüssige Verbindung haben. Eine weitere Weiterbildung der Erfindung ist darin zu sehen, dass eine Normalkraft zur Erzeugung der kraftschlüssigen Verbindung auf die an der kraftschlüssigen Verbindung beteiligten Reibflächen des Stromabnehmers und der Stromabnehmerhalterung wenigstens eine Richtungskomponente senkrecht zu einer vorgegebenen, eine Fahrtrichtung des Oberleitungsfahrzeugs repräsentierenden Richtung aufweist. Oder anders gewendet, die an der kraftschlüssigen Verbindung beteiligten Reibflächen des Stromabnehmers und der Stromabnehmerhalterung sind so ausgebildet und zueinander ausgerichtet, dass wenigstens eine Richtungskomponente der Haftreibungskraft der kraftschlüssigen Verbindung in Fahrtrichtung des Oberleitungsfahrzeugs wirkt.

Die Normalkraft auf jeweils wenigstens eine an der kraftschlüssigen Verbindung beteiligte Reibfläche des Stromabnehmers und der Stromabnehmerhalterung ist kann so bemessen werden, beispielsweise in Abhängigkeit vom Haftreibungskoeffizienten der an der kraftschlüssigen Verbindung beteiligten Reibflächen des Stromabnehmers und der Stromabnehmerhalterung, dass eine resultierende Haftreibungskraft in wenigstens eine vorgegebene Richtung kleiner ist als eine entgegen der Haftreibungskraft wirkenden, von außen auf die kraftschlüssige Verbindung einwirkende Kraft, die resultiert aus einer Kraft auf den Stromabnehmer, welche durch ein Einfädeln des Stromabnehmers in die Oberleitung auf den Stromabnehmer aufgebracht wird.

Die kraftschlüssige Verbindung ist daher durch eine Kraft auf den Stromabnehmer, welche durch ein Einfädeln des Stromabnehmers in die Oberleitung auf den Stromabnehmer aufgebracht wird, lösbar und die Erfindung ermöglicht somit, den Stromabnehmer bei einem Einfädeln des Stromabnehmers in die Oberleitung von der Stromabnehmerhalterung zu lösen, insbesondere entgegen der Fahrtrichtung des Oberleitungsfahrzeugs aus der Stromabnehmerhalterung heraus zu lösen.

Die Kraft entgegen der Haftreibungskraft und tangential zu den an der kraftschlüssigen Verbindung beteiligten Reibflächen, die zum Lösen der kraftschlüssigen Verbindung führen kann, kann Last-Kraft genannt werden.

Wie oben ausgeführt, kann die Normalkraft auf die an der kraftschlüssigen Verbindung beteiligten Reibflächen des Stromabnehmers und der Stromabnehmerhalterung wenigstens eine Richtungskomponente senkrecht auf die Längsachse des Fahrzeugs aufweisen. Gemäß einer weiteren Weiterbildung weist die Normalkraft wenigstens eine horizontale Richtungskomponente auf. Die an der kraftschlüssigen Verbindung beteiligten Reibflächen des Stromabnehmers und der Stromabnehmerhalterung sind dann vertikal ausgerichtet. Die Normalkraft könnte hingegen auch Lotrecht verlaufen. Die Reibflächen des Stromabnehmers und der Stromabnehmerhalterung lägen dann jeweils in einer horizontalen Ebene.

Die Normalkraft auf die an der kraftschlüssigen Verbindung beteiligten Reibflächen des Stromabnehmers und der Stromabnehmerhalterung kann so bemessen sein, insbesondere in Abhängigkeit vom Haftreibungskoeffizienten der an der kraftschlüssigen Verbindung beteiligten Reibflächen des Stromabnehmers und der Stromabnehmerhalterung sowie in Abhängigkeit von Form und Werkstoff des Stromabnehmers und der Stromabnehmerhalterung, dass die Haftreibungskraft zwischen den an der kraftschlüssigen Verbindung beteiligten Reibflächen des Stromabnehmers und der Stromabnehmerhalterung kleiner ist als eine zur plastischen Verformung des Stromabnehmers und/oder der Stromabnehmerhalterung notwendigen Kraft. Dennoch ist sie ausreichend hinsichtlich der betriebsbedingten Kräfte dimensioniert.

Eine weitere Weiterbildung der Erfindung ist darin zu sehen, dass der Stromabnehmer und die Stromabnehmerhalterung Mittel aufweisen, die ausgebildet und zueinander ausgerichtet sind, eine Relativbewegung des Stromabnehmers zur Stromabnehmerhalterung in einer vorgegebenen Betriebsstellung der Stromabnehmeranordnung in Richtung der Gewichtskraft zu blockieren. Eine Bewegung von Stromabnehmer nach unten relativ zur Stromabnehmerhalterung ist unterbunden. Als Mittel kommen beispielsweise zueinander komplementär ausgebildete und ausgerichtete Anschläge in Frage. Ein in vertikaler Richtung wirkender Anschlag des Stromabnehmers kann somit in vorgegebener Betriebsstellung in Anlage an einem in vertikaler Richtung wirkenden Anschlag der Stromabnehmerhalterung sein, um eine Relativbewegung in vertikaler Richtung der an der kraftschlüssigen Verbindung beteiligten Reibflächen des Stromabnehmers und der Stromabnehmerhalterung zueinander verhindern. Es könnte auch von einer formschlüssigen Verbindung von Stromabnehmer und Stromabnehmerhalterung gesprochen werden, die in Richtung der Gewichtskraft wirkt. Es liegt jedoch in jedem Fall noch wenigstens ein Freiheitsgrad zur Ausführung einer Relativbewegung der an der kraftschlüssigen Verbindung beteiligten Reibflächen des Stromabnehmers und der Stromabnehmerhalterung zueinander vor.

Weitergebildet weisen der Stromabnehmer und die Stromabnehmerhalterung Mittel auf, die ausgebildet und zueinander ausgerichtet sind, in einer vorgegebenen Betriebsstellung der Stromabnehmeranordnung eine Relativbewegung des Stromabnehmers zur Stromabnehmerhalterung in horizontaler Richtung zu blockieren. Zusammen mit den in vertikaler Richtung wirkenden Anschlägen weist der einzig verbliebene Freiheitsgrad nach oben. Die kraftschlüssige Verbindung zwischen Stromabnehmer und Stromabnehmerhalterung ließe sich so ausschließlich durch Bewegung des Stromabnehmers relativ zur Stromabnehmerhalterung nach oben lösen. Hierzu muss die entsprechende, die Haftreibung übersteigende Kraft aufgebracht werden. In weitere Richtungen sind der Stromabnehmer und die Stromabnehmerhalterung formschlüssig miteinander verbunden.

Erfindungsgemäß ist vorgesehen, dass die Stromabnehmerhalterung wenigstens ein in Betriebsstellung der Stromabnehmeranordnung nach oben offenes Langloch aufweist. Der Stromabnehmer kann mittels wenigstens einer, insbesondere horizontal verlaufenden, Schraube durch das in Betriebsstellung der Stromabnehmeranordnung nach oben offene Langloch mit der Stromabnehmerhalterung verschraubt sein, wobei jeweils wenigstens eine Reibfläche des Stromabnehmers und der Stromabnehmerhalterung zur Erzeugung der kraftschlüssigen Verbindung durch eine von der Schraube aufgebrachten Normalkraft zueinander vorgespannt sind. Die Reibflächen des Stromabnehmers und der Stromabnehmerhalterung werden durch die Schraube aufeinander gedrückt. Ansonsten liegt die Schraube an den Rändern des Langslochs an, was einen Formschluss bewirkt. Die kraftschlüssige Verbindung wirkt ausschließlich in Richtung des nach oben offenen Langlochs.

Die Schraubverbindungen zur Befestigung des Stromabnehmers sind dabei auf Haftreibung ausgelegt sind. Mit dem Drehmoment der Schraubverbindung können die Haftreibungskräfte relativ genau eingestellt werden. Diese zu errechnen liegt im fachüblichen Handeln. Die Verbindung wird dabei so ausgeführt, dass wenn der Stromabnehmer mit einer Zugkraft höher wie die Haftreibungskraft der Schraubverbindung gezogen wird, vom Oberleitungsfahrzeug getrennt wird, ohne größeren Schaden am Fahrzeugdach anzurichten. Der Schaden am Oberleitungsfahrzeug und gegebenenfalls am Stromabnehmer selbst ist dadurch minimiert.

Die Lösung ermöglicht eine definierte Krafteinleitung in das Fahrzeugdach, beispielsweise in eine dort angeordnete und fest mit dem Fahrzeugdach verbundene C-Schiene. Durch unterschiedliche Anzugsmomente der Schrauben kann die Krafteinleitung abhängig gemacht werden von der Steifigkeit der Tragstruktur des Fahrzeugdachs. Eine Verschiebung des Ringspanns (Tragrahmens) im Rohbau ist deshalb nicht mehr notwendig und damit entfallen auch aufwändige Anpassungen des Rohbaus des Oberleitungsfahrzeugs.

Gemäß einer weiteren Weiterbildung der Erfindung ist vorgesehen, dass der Stromabnehmer mittels einer zusätzlichen Traverse mit der Stromabnehmerhalterung kraftschlüssig verbunden ist. Die zusätzliche Traverse wird auch als Pantotraverse bezeichnet. Diese wird beispielsweise, wie oben ausgeführt, mit der fahrzeugseitig festen Stromabnehmerhalterung verschraubt.

Die Erfindung lässt zahlreiche Ausführungsformen zu. Sie wird anhand der nachfolgenden Figuren näher erläutert, in denen jeweils ein Ausgestaltungsbeispiel dargestellt ist. Gleiche Elemente in den Figuren sind mit gleichen Bezugszeichen versehen.

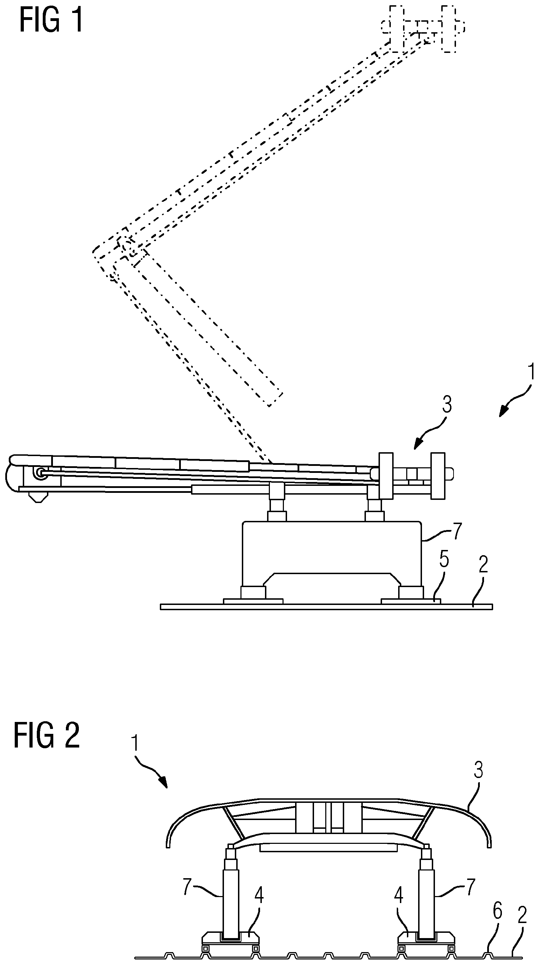

- Fig. 1: zeigt eine erfindungsgemäße Stromabnehmeranordnung auf einem Dach eines Oberleitungsfahrzeugs von der Seite,
- Fig. 2: zeigt die erfindungsgemäße Stromabnehmeranordnung aus Fig. 1 von vorne,

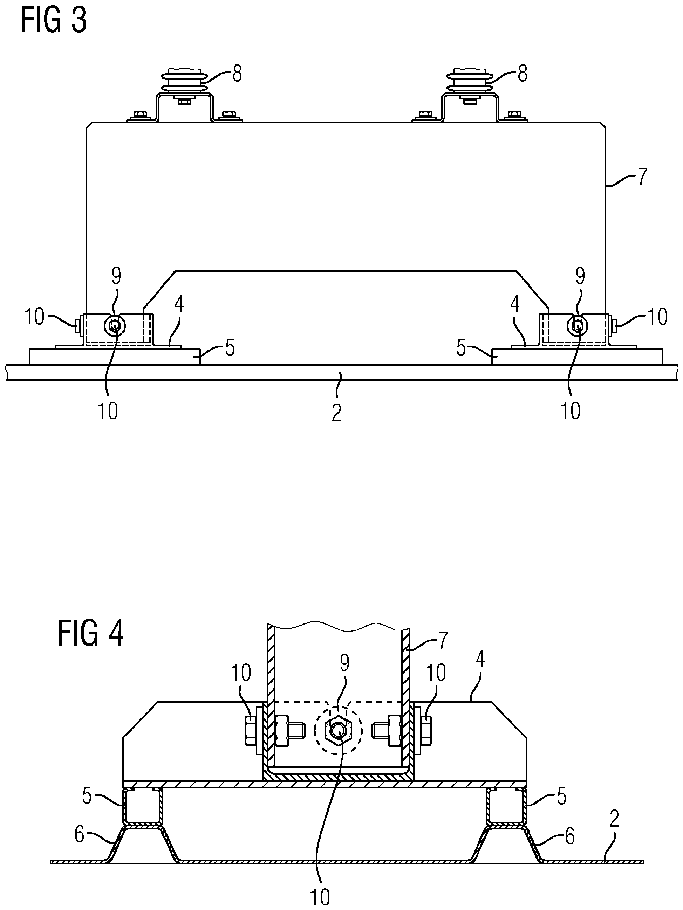

- Fig. 3: zeigt eine Detailansicht zu Fig. 1,
- Fig. 4: zeigt eine Detailansicht zu Fig. 2.

In den Figuren ist erfindungsgemäße Stromabnehmeranordnung 1 auf einem Dach 2 eines Oberleitungsfahrzeugs montiert dargestellt.

Die Stromabnehmeranordnung 1 umfasst einen Stromabnehmer 3 und eine fahrzeugseitige Stromabnehmerhalterung 4 zum ausgerichteten Befestigen des Stromabnehmers auf einem Dach 2 des Oberleitungsfahrzeugs in einer vorgegebenen, nach einer Hauptfahrtrichtung des Oberleitungsfahrzeugs und einer Hauptrichtung einer Oberleitung ausgerichteten Position.

Die Stromabnehmerhalterung 4 ist hier in C-Schienen 5 geführt und hier durch Verschraubung fest mit dem Dach 2 des Oberleitungsfahrzeugs verbunden. Die C-Schienen 5 sind hier ihrerseits auf Sicken 6 im Dach 2 des Oberleitungsfahrzeugs angeordnet. Sicken 6 und C-Schienen verlaufen in Längsrichtung des Oberleitungsfahrzeugs und somit ebenfalls parallel zur Hauptfahrtrichtung des Oberleitungsfahrzeugs und zur Hauptrichtung der Oberleitung.

Die zum Oberleitungsfahrzeug hin weisende Unterseite des Stromabnehmers 3 ist hier durch eine Traverse 7 gebildet, auf welcher die restlichen Komponenten des Stromabnehmers 1 fest angeordnet sind. Die Traverse 7 bildet eine Art Fuß des Stromabnehmers 3 zu besseren Lastverteilung auf das Dach 2 des Oberleitungsfahrzeugs. An die Traverse 7 fügen sich Isolatoren 8 des Stromabnehmers 3 an, die wiederum über Schraubverbindungen miteinander verbunden sind. Die sonstigen Komponenten des Stromabnehmers 3 und die Stromabnehmerhalterung sind somit unter Zwischenlage der Traverse 7 mittelbar über die Traverse 7 miteinander verbunden.

Stromabnehmer 3 und Stromabnehmerhalterung 4 sind über die Traverse 7 kraftschlüssig miteinander verbunden. Die kraftschlüssige Verbindung ist dabei derart ausgebildet, dass sie bei Einwirkung einer Kraft vorgegebenen Betrags und Richtung lösbar ist. Bei der Kraft handelt es sich insbesondere um eine von Außen auf den Stromabnehmer 3 aufgeprägte Kraft, insbesondere durch Einfädeln in die Oberleitung oder in ein ortsfestes Hindernis. Die vorgegebene Richtung zeigt hier in dargestellter Betriebsstellung entgegen der Schwerkraft nach oben. Zum Lösen der kraftschlüssigen Verbindung ist somit eine Kraft vorgegebenen Betrags nach oben hin auf den Stromabnehmer 3 wirkend notwendig. Grundsätzlich ist die kraftschlüssige Verbindung derart auszubilden, dass sie durch eine Kraft auf den Stromabnehmer 3, welche durch ein Einfädeln des Stromabnehmers in die Oberleitung auf den Stromabnehmer 3 aufgebracht wird, lösbar ist.

Beim Einfädeln des Stromabnehmers 3 in die Oberleitung übersteigt der Betrag der Kraft entgegen der Richtung einer Haftreibungskraft zwischen den an der kraftschlüssigen Verbindung beteiligten Reibflächen des Stromabnehmers 3 und der Stromabnehmerhalterung 4 einen vorgegebenen Wert der Haftreibungs-kraft, so dass es zum Lösen der kraftschlüssigen Verbindung zwischen Stromabnehmer 3 und Stromabnehmerhalterung 4 kommt.

Die Haftreibungskraft zwischen den an der kraftschlüssigen Verbindung beteiligten Reibflächen des Stromabnehmers 3 und der Stromabnehmerhalterung 4 wird durch eine Normalkraft senkrecht auf die besagten Reibflächen aufgebracht. Hier sind Schraubverbindungen dafür vorgesehen.

Dazu weist die Stromabnehmerhalterung 4 mehrere nach oben offene Langlöcher 9 in vertikal verlaufenden Blechen auf, durch welche Schrauben 10 geführt sind. Die Schrauben 10 sind zusätzlich durch übliche Durchgangsbohrungen in ebenfalls vertikal verlaufenden Blechen der Traverse 7 geführt, welche an den Blechen der Stromabnehmerhalterung 4 anliegen. Die Bohrungen sind gegenseitig fluchtend ausgerichtet. Durch Aufbringen eines Anzugdrehmoments auf die Schraubenköpfe respektive auf die diesen gegenüberliegende Muttern, werden die an der kraftschlüssigen Verbindung beteiligten Reibflächen des Stromabnehmers 3 und der Stromabnehmerhalterung 4 aufeinander gepresst, wodurch die Haftreibungskraft zwischen diesen sich berührenden Reibflächen erzeugt wird. Die Haftreibungskraft kann also durch die Anzugsdrehmomente relativ genau bestimmt und dosiert werden.

Die Normalkräfte verlaufen hier axial zu den Schrauben 10. Die Schrauben 10 verlaufen ihrerseits in einer horizontalen Ebene und senkrecht oder parallel zu der die Hauptfahrtrichtung des Oberleitungsfahrzeugs repräsentierenden Längsrichtung des Oberleitungsfahrzeugs. Die an der kraftschlüssigen Verbindung beteiligten Reibflächen des Stromabnehmers 3 und der Stromabnehmerhalterung 4 sind somit vertikal ausgerichtet.

Wie oben bereits beschrieben, muss die von außen durch Einfädeln des Stromabnehmers 3 oder ähnliches aufgebrachte Last-Kraft, welche die Haftreibungs-Kraft überwindet, um die kraftschlüssige Verbindung zwischen Stromabnehmer 3 und Stromabnehmerhalterung 4 zu lösen, tangential zur der Haftreibungs-Kraft nach oben wirken, da nach unten und horizontal Anschläge durch die Schrauben 10 einerseits und die Ränder der Langlöcher 9 andererseits gegeben sind. Der einzig verbliebene Freiheitsgrad einer Relativbewegung von Stromabnehmer 3 und Stromabnehmerhalterung 4 ist somit entgegen der Schwerkraftrichtung. Nur in diese Richtung ist der Stromabnehmer 3 und die Stromabnehmerhalterung 4 ausschließlich kraftschlüssig miteinander verbunden.

In Richtung der Gewichtskraft und in horizontaler Richtung wirken die Ränder der Langlöcher 9 für die durchgeführten Schrauben 10 als Mittel zur Blockierung der Relativbewegung des Stromabnehmers 3 zur Stromabnehmerhalterung 4.

Grundsätzlich könnte auch von der vorliegenden Ausführungsform abgewichen werden. Die Normalkräfte sind nicht zwingend senkrecht zu einer Längsmittenebene des Oberleitungsfahrzeugs oder parallel zur Längsachse des Oberleitungsfahrzeugs aufzubringen. Die Normalkraft könnte auch in vertikale Richtung wirken. Der Stromabnehmer könnte nach oben und unten einfasst und/oder eingeklemmt sein und könnte nach hinten, entgegen der Fahrtrichtung des Oberleitungsfahrzeugs aus der Stromabnehmerhalterung herausgelöst werden. Da in diese Richtung jedoch auch größere Betriebskräfte wirken, müssten jedoch auch die Normalkräfte größer bemessen sein.

## Patentansprüche

1. Stromabnehmeranordnung (1) für ein Oberleitungsfahrzeug umfassend einen Stromabnehmer (3) und eine Stromabnehmerhalterung (4), wobei der Stromabnehmer (3) und die Stromabnehmerhalterung (4) kraftschlüssig miteinander verbunden sind, so dass die kraftschlüssige Verbindung bei Einwirkung einer Kraft vorgegebenen Betrags und Richtung lösbar ist,
**dadurch gekennzeichnet, dass**
der Stromabnehmer (3) mittels wenigstens einer Schraube (10) durch ein in Betriebsstellung der Stromabnehmeranordnung (1) nach oben offenes Langloch (9) in der Stromabnehmerhalterung (4) mit der Stromabnehmerhalterung (4) verschraubt ist, wobei jeweils wenigstens eine Reibfläche des Stromabnehmers (3) und der Stromabnehmerhalterung (4) zur Erzeugung der kraftschlüssigen Verbindung durch eine von der Schraube (10) aufgebrachten Normalkraft aufeinander vorgespannt sind.

2. Stromabnehmeranordnung nach Anspruch 1, **dadurch gekennzeichnet, dass** in einer vorgegebenen Betriebsstellung der Stromabnehmeranordnung (1) eine Normalkraft zur Erzeugung der kraftschlüssigen Verbindung auf die an der kraftschlüssigen Verbindung beteiligten Reibflächen des Stromabnehmers (3) und der Stromabnehmerhalterung (4) wenigstens eine Richtungskomponente senkrecht zu einer vorgegebenen, eine Fahrtrichtung des Oberleitungsfahrzeugs repräsentierenden Richtung aufweist.

3. Stromabnehmeranordnung nach einem der Ansprüche 1 oder 2, **dadurch gekennzeichnet, dass** die Normalkraft in einer vorgegebenen Betriebsstellung der Stromabnehmeranordnung (1) auf die an der kraftschlüssigen Verbindung beteiligten Reibflächen des Stromabnehmers (3) und der Stromabnehmerhalterung (3) wenigstens eine horizontale Richtungskomponente aufweist.

4. Stromabnehmeranordnung nach einem der Ansprüche 1 bis 3, **dadurch gekennzeichnet, dass** der Stromabnehmer (3) und die Stromabnehmerhalterung (4) Mittel (9, 10) aufweisen, die ausgebildet und zueinander ausgerichtet sind, eine Relativbewegung des Stromabnehmers (3) zur Stromabnehmerhalterung (4) in einer vorgegebenen Betriebsstellung der Stromabnehmeranordnung (1) in Richtung der Gewichtskraft zu blockieren.

5. Stromabnehmeranordnung nach einem der Ansprüche 1 bis 4, **dadurch gekennzeichnet, dass** der Stromabnehmer (3) und die Stromabnehmerhalterung (4) Mittel (9, 10) aufweisen, die ausgebildet und zueinander ausgerichtet sind, eine Relativbewegung des Stromabnehmers (3) zur Stromabnehmerhalterung (4) in einer vorgegebenen Betriebsstellung der Stromabnehmeranordnung (1) in horizontaler Richtung zu blockieren.

6. Stromabnehmeranordnung nach einem der Ansprüche 1 bis 5, **dadurch gekennzeichnet, dass** der Stromabnehmer (3) mittels einer zusätzlichen Traverse (7) mit der Stromabnehmerhalterung (4) kraftschlüssig verbunden ist.

7. Oberleitungsfahrzeug mit wenigstens einer Stromabnehmeranordnung nach einem der Ansprüche 1 bis 6.

8. Oberleitungsfahrzeug nach Anspruch 7, **dadurch gekennzeichnet, dass** es ein Schienenfahrzeug ist.

## Claims

1. Current collector arrangement (1) for an overhead line vehicle comprising a current collector (3) and a current collector bracket (4), wherein the current collector (3) and the current collector bracket (4) are interconnected with a non-positive fit, so that the non-positive connection can be released when exposed to a force with a predefined magnitude and direction,
**characterised in that**
the current collector (3) is screwed to the current collector bracket (4), by means of at least one screw (10), through a slot (9) in the current collector bracket (4) that is open upwards in the operating position of the current collector arrangement (1), wherein in each case at least one friction surface of the current collector (3) and the current collector bracket (4) are pretensioned in relation to one another to generate the non-positive connection by way of a normal force applied by the screw (10) .

2. Current collector arrangement according to claim 1, **characterised in that**, in a predefined operating position of the current collector arrangement (1), a normal force for generating the non-positive connection on the friction surfaces, which are involved in the non-positive connection, of the current collector (3) and the current collector bracket (4) has at least one directional component perpendicular to a predefined direction that represents a direction of travel of the overhead line vehicle.

3. Current collector arrangement according to one of claims 1 or 2, **characterised in that** the normal force, in a predefined operating position of the current collector arrangement (1), has at least one horizontal directional component on the friction surfaces, which are involved in the non-positive connection, of the current collector (3) and the current collector bracket (3).

4. Current collector arrangement according to one of claims 1 to 3, **characterised in that** the current collector (3) and the current collector bracket (4) have means (9, 10) that are embodied and oriented in relation to one another so as to block a relative movement of the current collector (3) in relation to the current collector bracket (4) in the direction of the weight force in a predefined operating position of the current collector arrangement (1).

5. Current collector arrangement according to one of claims 1 to 4, **characterised in that** the current collector (3) and the current collector bracket (4) have means (9, 10) that are embodied and oriented in relation to one another so as to block a relative movement of the current collector (3) in relation to the current collector bracket (4) in a horizontal direction in a predefined operating position of the current collector arrangement (1).

6. Current collector arrangement according to one of claims 1 to 5, **characterised in that** the current collector (3) is connected to the current collector bracket (4) with a non-positive fit by means of an additional cross-member (7).

7. Overhead line vehicle with at least one current collector arrangement according to one of claims 1 to 6.

8. Overhead line vehicle according to claim 7, **characterised in that** it is a rail vehicle.

## Revendications

1. Système (1) d'appareil de prise de courant d'un véhicule alimenté par caténaire, comprenant un appareil (3) de prise de courant et un support (4) d'appareil de prise de courant, dans lequel l'appareil (3) de prise de courant et le support (4) d'appareil de prise de courant sont reliés entre eux à coopération de force de manière à ce que la liaison à coopération de force puisse être défaite par application d'une force d'une intensité et d'une direction données à l'avance,
**caractérisé en ce que**
l'appareil (3) de prise de courant est vissé au support (4) de l'appareil de prise de courant au moyen d'une vis (10) dans une boutonnière (9) du support (4) de l'appareil de prise de courant ouverte vers le haut en la position de fonctionnement du système (1) d'appareil de prise de courant, dans lequel respectivement au moins une surface de frottement de l'appareil (3) de prise de courant et du support (4) de l'appareil de prise de courant sont, pour la production de la liaison à coopération de force, précontraintes l'une sur l'autre par une force normale appliquée par la vis (10).

2. Système (1) d'appareil de prise de courant suivant la revendication 1, **caractérisé en ce que**, dans une position de fonctionnement donnée à l'avance du système (1) d'appareil de prise de courant, une force normale de production de la liaison à coopération de force sur les surfaces de frottement, participant à la liaison à coopération de force, de l'appareil (3) de prise de courant et du support (4) de l'appareil de prise de courant, a au moins une composante directionnelle perpendiculaire à une direction donnée à l'avance représentant une direction de circulation du véhicule alimenté par caténaire.

3. Système suivant l'une des revendications 1 ou 2, **caractérisé en ce que** la force normale a, dans une position de fonctionnement donnée à l'avance du système (1) d'appareil de prise de courant, sur les surfaces de frottement participant à la liaison à coopération de force de l'appareil (3) de prise de courant et du support (4) de l'appareil de prise de courant au moins une composante directionnelle horizontale.

4. Système suivant l'une des revendications 1 à 3, **caractérisé en ce que** l'appareil (3) de prise de courant et le support (4) de l'appareil de prise de courant ont des moyens (9, 10), qui sont constitués et orientés les uns par rapport aux autres de manière à bloquer, dans la direction de la force de gravité, un mouvement relatif de l'appareil (3) de prise de courant par rapport au support (4) de l'appareil de prise de courant, dans une position de fonctionnement donnée à l'avance du système (1) d'appareil de prise de courant.

5. Système suivant l'une des revendications 1 à 4, **caractérisé en ce que** l'appareil (3) de prise de courant et le support (4) d'appareil de prise de courant ont des moyens (9, 10), qui sont constitués et orientés les uns par rapport aux autres de manière à bloquer, dans la direction horizontale, un mouvement relatif de l'appareil (3) de prise de courant par rapport au support (4) de l'appareil de prise courant dans une position de fonctionnement donnée à l'avance du système (1) d'appareil de prise de courant.

6. Système suivant l'une des revendications 1 à 5, **caractérisé en ce que** l'appareil (3) de prise de courant est relié à coopération de force au support (4) de l'appareil de prise de courant au moyen d'une traverse (7) supplémentaire.

7. Véhicule à caténaire ayant au moins un système d'appareil de prise de courant suivant l'une des revendications 1 à 6.

8. Véhicule à caténaire suivant la revendication 7, **caractérisé en ce que** c'est un véhicule ferroviaire.
